**Europäisches Patentamt**

**European Patent Office**

**Office européen des brevets**

(11) Publication number: **0 132 294**
**B1**

# EUROPEAN PATENT SPECIFICATION

(45) Date of publication of the patent specification: **11.03.87**

(51) Int. Cl.⁴: **C 01 B 15/029, B 01 J 23/44**

(21) Application number: **84304139.3**

(22) Date of filing: **19.06.84**

(54) Catalytic process for making H2O2 from hydrogen and oxygen.

(30) Priority: **22.06.83 US 506893**

(43) Date of publication of application:
**30.01.85 Bulletin 85/5**

(45) Publication of the grant of the patent:
**11.03.87 Bulletin 87/11**

(84) Designated Contracting States:
**AT BE DE FR GB IT NL SE**

(56) References cited:
**FR - A - 2 306 937**
**US - A - 4 009 252**
**US - A - 4 279 883**
**US - A - 4 336 238**
**US - A - 4 336 239**
**US - A - 4 379 778**

(73) Proprietor: **E.I. DU PONT DE NEMOURS AND COMPANY,**
**1007 Market Street, Wilmington Delaware 19898 (US)**

(72) Inventor: **Gosser, Lawrence Wayne, 22 Brandywine**
**Boulevard Edgewood Hills, Wilmington**
**Delaware 19809 (US)**

(74) Representative: **Woodcraft, David Charles et al,**
**BROOKES & MARTIN High Holborn House 52/54 High**
**Holborn, London, WC1V 6SE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention concerns an improved catalytic process for producing hydrogen peroxide from hydrogen and oxygen. The process improvements described herein permit production of hydrogen peroxide in concentrations greater than heterofore possible.

Direct reaction of hydrogen and oxygen catalyzed by Group VIII metals to produce hydrogen peroxide is known. A typical reaction is disclosed in U.S. 4 379 778. The art processes, howerer, appear to be incapable of producing $H_2O_2$ in concentrations even as high as 13%.

For instance, U.S. 4 009 252 discloses a Pd-catalyzed process for making $H_2O_2$ in concentrations as high as 12.8% (7.2 mol %); see Table 4, column 9. That relatively high concentration of $H_2O_2$ (relatively high compared to the prior art) is achieved, however, by hydrogen pretreatment of a Pd-on-silica catalyst.

U.S. 4 279 883 discloses supported Pd catalysts with carbon, silica, and a number of other materials being described as equivalent for support purposes.

U.S. 4 336 238 and U.S. 4 336 239 disclose the use of a palladium on carbon catalyst. Howerer, the medium employed comprises up to 95% by volume of an organic solvent. Moreover, $H_2O_2$ concentrations are quite low, significantly below those described in U.S. 4 009 252 supra.

This invention concerns an improved catalytic method for making hydrogen peroxide from hydrogen and oxygen in a reaction medium at superatmospheric pressures, characterised in that:

(i) the oxygen and hydrogen are reacted in an aqueous reaction medium containing not more than 2% by weight of an organic component; and

(ii) as catalyst, is used a catalytically effective amount of Pd on adsorbent carbon in the weight ratio of Pd to Pd plus carbon of above 0.5 percent.

By «adsorbent» carbon is meant carbon which adsorbs at least 0.1 mg of palladium per 10 mg of powdered carbon when the carbon is contacted at room temperature for five minutes with a solution prepared from 1 mg of $PdCl_2$ per gram of 0.1 N NCl at a ratio of carbon to palladium solution of 6 mg/g.

It is characteristic of the improved process of this invention that the Pd/C catalyst is relatively resistant to loss of Pd from the C in solutions comprising HCl and hydrogen peroxide. This characteristic is believed to affect the levels of hydrogen peroxide that are obtainable by this process. In that regard, concentrations of the $H_2O_2$ in excess of 13% by weight are regularly achievable without hydrogen pretreatment of the catalyst or the aqueous medium. Good catalyst lifetime is characteristic of the process of this invention.

This invention also concerns an improved method for making hydrogen peroxide as described employing not a preformed Pd/C catalyst but one that is made in situ. Process step (ii) wherein the catalyst is made in situ comprises:

(ii) employing a catalytically effective amount of Pd on adsorbent carbon catalyst, said catalyst prepared by adding a Pd salt solution and finely divided adsorbent carbon to the reaction vessel or to a vessel interconnected with said reaction vessel, so that the resulting reaction mixture has a weight ratio of Pd to Pd plus C of about 0.5 percent.

The ratio of Pd to Pd plus carbon can vary from more than 0.5 normally up to 10 percent, the upper limit being a practical one. Acceptable results are achieved at 2% Pd to Pd plus carbon. The concentration of Pd/C catalyst in the reaction mixture will be about 0.01 to 2 percent, preferably 0.05 to 1 percent by weight of the reactants for best results. Catalyst particles that pass a 325 mesh screen are preferred. Best results are obtained with particles that are smaller than about 5 microns in size.

Typically, the process has been run at relative partial pressure of $O_2$ to $H_2$ of about 2 to 1 up to 20 to 1 or higher. Ratios of 20 to 1 and above are preferred to avoid the danger of explosion during continuous process runs. Although ratios of less than 2 to 1 can be employed, such ratios may result in lower $H_2O_2$ concentrations. When stated that substantially no organic component is present in the aqueous reaction medium, it is meant that no organic component in excess of about 2% by weight of the reaction medium is present.

It is preferred that the source of Pd for in situ catalyst preparation be a solution of a palladium chloride complex in aqueous HCl. When the catalyst is made in situ it is preferred that chloride ion be present in stoichiometric excess over that necessary to supply $PdCl_2$. Excess chloride ion should also be present when preformed Pd on C catalyst is used.

The reaction mixture will comprise both an acid component and a chloride ion component for good selectivity. The presence of acid helps improve $H_2O_2$ concentrations at low chloride ion concentrations. Acids found to be acceptable for use in the process of this invention include hydrochloric, phosphoric, sulfuric and perchloric. It is believed that other strong protonic acids can also be employed provided they are compatible with the reaction ingredients.

It is convenient that HCl be employed as the source of chloride ion. In addition, other acids can be used to increase the hydrogen ion concentration. For best results, chloride ion and hydrogen ion concentrations in the reaction mixture from 0.01 to 2.0 M are preferably employed, though they need not be identical.

The carbon support can be derived from many sources providing that it exhibits the above described palladium-adsorption characteristics. Representative adsorbent carbons include Alfa USP activated charcoal, Strem activated carbon, Supelco Carbosieve B and West States carbon cc-521 G. Some commercially available carbons which are not adsorbent can be converted to adsorbent carbons by methods (described hereafter) designed for that purpose. Typical of carbons which are nonadsorbent as purchased are MCB wood charcoal, Carbopak C, Graphite-38 and Fisher reagent charcoal.

Operable carbons have been obtained from a number of sources including coconut husks, petroleum, coal and vinylidene chloride polymer. Suitable carbons can also be prepared by heating sugars and

cellulose in $N_2$ by stages to 900° to 1100°C and then post-treating to generate activity. The most preferred post-treatment includes high temperature treatment in an atmosphere containing water vapor. Other activation procedures such as high temperature (about 1000°C) treatment in $CO_2$ or $H_2$ can also be employed. Suitable material was also formed by mild oxidation (450° in air) of pyrolyzed cellulose. Material formed in this way can be improved by subsequent heating to about 950°C in $N_2$. In many instances the adsorbency of initially poorly adsorbent carbons can be enhanced substantially by such activation procedures.

An advantage of the use of a substantially all-aqueous medium is that explosion hazards associated with high hxdrogen peroxide concentrations and organic cosolvents are avoided. Another advantage is that there is easier separation of hydrogen peroxide from reaction product in the absence of organics. Other advantages include the lessening of explosive hazards caused by buildup of organic peroxy compounds and elimination of catalyst-fouling caused by decomposition of organic materials.

The process can be carried out at 0°C to 50°C and preferably from about 0°C to 16°C. Lower temperatures can be employed so long as liquid freezing is not a problem. Depending on the type and concentration of reaction ingredients, temperatures below —10°C are contemplated. Presence of about 15% $H_2O_2$ in the reaction mass will permit operation at —10°C without freezing.

Preferred pressures for hydrogen peroxide formation are about 400 psig (2.86 MPa) to 2500 psig (17.34 MPa). A pressure range of from about 100 psig to 4000 psig can be used. In semibatch operation, with gases continuously entering and exiting the reactor, peroxide concentrations above about 15% can be achieved at about 400 psig, an inlet $O_2/H_2$ ratio of about 1.1, and exit gas $O_2/H_2$ ratios of up to about 6 or 7 at the end of the run.

Continuous operation of the process of this invention is contemplated at about 1000 psig, about 50 psig $H_2$ partial pressure, about 950 psig $O_2$ partial pressure, about 1 mg of 5% Pd/C per gram of reaction mixture, about 0.05 to 0.1 n HCl, about 0.5M $H_3PO_4$, and about —10°C to 15°C, with vigorous gas-liquid contact.

The following Examples illustrate the direct formation of hydrogen peroxide from hydrogen and oxygen. The «Procedure» represents the standard test employed to determine carbon adsorbency. With regard to exemplification of this invention, it is noted that experimental results not included herein support the conclusion that the described process very often produces concentrations of $H_2O_2$ in excess of 13%.

*Example 1*
A reaction mixture was prepared from 5.0 mg of commercial (Alfa) 5% Pd/C and 1.00 g of aqueous 0.1 N HCl. This was placed in a small heavy walled glass flask containing a Teflon® covered magnetic stirring bar and sparged with $N_2$. The flask was closed with a metal flange and Teflon® gasket so that a flow of gas could be maintained under pressure.

The outside of the flask was cooled with a stream of cold air and the outside wall temperature was monitored with a thermocouple. The flask and gas supply equipment were put into a heavy metal barricade. The apparatus was evacuated to 25 in Hg (0.017 MPa), and then filled to 450 psig (3.20 MPa) with argon for a 15 min pressure test. The pressure was reduced again to 25 in Hg (0.017 MPa) and then $H_2$ was admitted to 100 psig (0.79 MPa) for 5 min (all at room temperature). The pressure was again reduced to 25 in Hg (0.017 MPa) and mixed gas was admitted to a pressure of 391 psig (2.80 MPa) and maintained between that pressure and 381 psig (2.73 MPa) during the experiment.

The reaction mixture was stirred for 4.5 hr while gas was allowed to flow slowly from the flask and be replaced by gas from the supply reservoir. The temperature varied between 9° and 11°. The gas supply reservoir and the exit from the reaction flask were both connected to a gas chromatograph analytical system. The reservoir gas composition was He 5.44, $H_2$ 44.2, $O_2$ 50.4 mol %. The gas flowing from the flask showed decreasing $H_2$ concentration and increasing $O_2$ during the run (He, 11.4; $H_2$, 23.9; $O_2$, 64.8 in last analysis). The weight gain by the reaction mixture during the run was 0.96 g. The $H_2O_2$ content was determined by titration with potassium permanganate solution to be 15.1 weight percent.

*Example 2*
The apparatus was the same as that described in Example 1. The reaction mixture was prepared by mixing 3 mg of commercial (Alfa) 5% Pd/C catalyst with 1.00 ml of 0.1 N HCl (aqueous). The leak check was done with 450 psig (3.20 MPa) of $O_2$. No hydrogen pressure step was employed. The reaction period was 3.9 hr with the temperature between 1° and 5°. The pressure varied between 540 psig (3.82 MPa) and 370 psig (2.65 MPa) during the run. The reservoir gas composition was He, 4.8; $H_2$, 41.7; $O_2$, 53.6 mol %. Near the end of the run the exit gas from the flask contained He, 11.1; $H_2$, 14.4; $O_2$, 74.5%. The weight gain during the run was 0.88 g. The $H_2O_2$ content was 18.1 weight percent.

*Example 3*
The apparatus for this experiment was a 400 ml autoclave containing a glass liner. The autoclave was mounted on a shaking table in a large metal barricade with facilities for adding and removing gases and monitoring temperature from outside of the barricade. The reaction mixture consisted of a mixture prepared from 10 mg of commercial adsorbent carbon powder (Strem), 10.0 g of 0.1 N HCl and 1.7 mg of $PdCl_2$. The charged autoclave was evacuated to 25 in Hg (0.017 MPa) and then 250 psig (1.83 MPa) of $H_2$ was added. After 15 minutes, $O_2$ was added to bring the pressure up to 750 psig (5.27 MPa). After 4 hours agitation with the autoclave body temperature at 10°, the weight gain was 2.60 g and the hydrogen peroxide content in the reaction mixture was found to be 8.9 weight percent by titration with potassium permanganate solution.

*Example 4*

The apparatus used was the 400 ml shaken autoclave described in Example 3. The reaction mixture was prepared from 10 mg of adsorbent carbon (Strem) which had passed through a 400 mesh sieve (37 μm), 0,85 mg of $PdCl_2$, and 10.0 g of 0.1 N HCl. Oxygen was added to the vessel to 1000 psig (7.00 MPa) and after 10 minutes hydrogen was added to bring the pressure to 1500 psig (10.44 MPa). Agitation was continued for 4 hr with the autoclave body at 12° to 14°. The weight gain was 2.74 g and permanganate titration showed the $H_2O_2$ content of the recovered mixture to be 10.7 weight percent.

*Example 5*

The apparatus used was the 400 ml shaken autoclave described in Example 3. The reaction mixture was prepared from 10 mg of adsorbent carbon (Strem) of particle size less than 5 μm added to 10.0 g of an aqueous solution of 0.85 mg of $PdCl_2$ dissolved in 0.1 N HCl. Oxygen was added to 1000 psig (7.00 MPa) and after 10 minutes hydrogen was added to 1500 psig (10.44 MPa). Agitation was continued for 4 hr with the temperature 11° to 13°. The weight gain was 5.48 g and the permanganate titration showed that 18.7 weight percent of hydrogen peroxide had been formed.

*Example 6*

The apparatus used was the 400 ml shaken autoclave described in Example 3. The reaction mixture was prepared from 20 mg of commercial (Alfa) 5% Pd/C catalyst which had been passed through a 325 mesh (44μm) sieve and 10.0 g of 0.1 N HCl. Hydrogen was added to 300 psig (2.17 MPa) and then oxygen was added to 2500 psig (17.34 MPa). Agitation was continued for 3.3 hr with the autoclave body at 14° to 16°. The weight increase was 5.16 g and the $H_2O_2$ content of the recovered reaction mixture was 22.8 weight percent.

*Example 7*

The apparatus used was the 400 ml shaken autoclave described in Example 3. The reaction mixture was prepared from 15 mg of powdered Alfa 10% Pd/C catalyst and 10.0 g of 0.1 N HCl. Oxygen was added to the vessel to 1000 psig (7.00 MPa) and after 15 minutes, hydrogen was added to 1500 psig (10.44 MPa). The mixture was shaken for 4 hr with the autoclave body at about 10°C. The weight gain was 6.38 g and the $H_2O_2$ content of the recovered reaction mixture was 25.2 weight percent.

*Example 8*

The apparatus used was the 400 ml shaken autoclave described in Example 3. The reaction mixture was prepared from 0.50 g of solution containing 1.7 mg of $PdCl_2$/g of solution, 1,0 g of a solution containing 1 mg Tamol® dispersing agent (Rohm & Haas SN 6-0224) per g distilled water, 4.0 g of distilled water, 4.5 g of 0.2 N HCl and 10 mg of Strem carbon particles less than 5 μm in size. Oxygen was added to the vessel to 1000 psig (7.00 MPa) and after 10 minutes hydrogen was added to 1500 psig (10.44 MPa). The mixture was shaken for 4 hr with the au-

toclave body at 10°C to 12°C. The weight gain was 5.33 g and the $H_2O_2$ content of the recovered reaction mixture was 22.9 weight percent.

*Procedure*

The following formula was employed to determine whether a particular carbon had the required degree of adsorbency:

$$\text{No. of mg of Pd per 10 mg of carbon} = \left[ 1 - \frac{\text{adsorbence of carbon-treated solution}}{\text{adsorbence of untreated solution}} \right] \times \left[ \frac{\text{mg of PD}}{\text{10 mg of carbon in starting solution}} \right]$$

The net optical densities of the supernatant $PdCl_2$-containing liquids were determined at 450 nm in a 1 cm cell using a Carey 14 spectrometer.

**Claims**

1. A metod of making hydrogen peroxide from hydrogen and oxygen in a reaction medium at superatmospheric pressures, chatacterised in that:

(i) the oxygen and hydrogen are reacted in an aqueous reaction medium containing not more than 2% by weight of an organic component; and

(ii) as catalyst, is used a catalytically effective amount of Pd on adsorbent carbon in the weight ratio of Pd to Pd plus carbon of above 0.5 percent.

2. A method as claimed in claim 1 wherein the Pd on carbon catalyst is prepared in situ.

3. A method as claimed in claim 2 wherein the catalyst is prepared in situ by charging a palladium salt solution together with finely divided carbon to the aqueous reaction medium.

4. A method as claimed in any preceding claim wherein the weight ratio of Pd to Pd plus carbon is above 2 percent.

5. A method as claimed in any preceding claim wherein the reaction medium has a chloride ion concentration between 0.01 to 2 M and a hydrogen ion concentration between 0.01 to 2 M.

6. A method of making hydrogen peroxide from hydrogen and oxygen in a reaction medium at superatmospheric pressures, characterised in that:

(i) an aqueous reaction medium containing not more than 2% by weight of an organic component is used; and

(ii) a catalytically effective amount of Pd on adsorbent carbon is used as catalyst, said catalyst being prepared in situ by adding a Pd salt solution and finely divided carbon to the $H_2O_2$ reaction vessel or to a vessel interconnected with said reaction vessel, so that the resulting reaction mixture has a ratio of Pd to Pd plus carbon of above 0.5 percent.

7. A method as claimed in claim 6 wherein the weight ratio of Pd to Pd plus carbon is above 2 percent.

8. A method as claimed in claim 6 or claim 7 wherein the chloride ion concentration is between 0.01 and 2M and the hydrogen ion concentration is between 0.01 to 2M.

**Patentansprüche**

1. Verfahren zur Herstellung von Wasserstoffperoxid aus Wasserstoff und Sauerstoff in einem Reaktionsmedium bei erhöhtem Druck, dadurch gekennzeichnet, dass

(i) der Sauerstoff und Wasserstoff in einem nicht mehr als 2 Gew.-% einer organischen Komponente enthaltenden wässrigen Reaktionsmedium miteinander umgesetzt werden; und

(ii) als Katalysator eine katalytisch wirksame Menge Pd auf Aktivkohle im Gewichtsverhältnis von Pd zu Pd plus Kohle von mehr als 0,5% verwandt wird.

2. Verfahren, wie in Anspruch 1 beansprucht, worin der Pd-auf-Kohle-Katalysator in situ hergestellt wird.

3. Verfahren, wie in Anspruch 2 beansprucht, worin der Katalysator in situ durch Einbringen einer Palladiumsalzlösung zusammen mit fein verteilter Kohle in das wässrige Reaktionsmedium hergestellt wird.

4. Verfahren, wie in einem vorstehenden Anspruch beansprucht, worin das Gewichtsverhältnis von Pd zu Pd plus Kohle mehr als 2% beträgt.

5. Verfahren, wie in einem vorstehenden Anspruch beansprucht, worin das Reaktionsmedium eine Chloridionenkonzentration zwischen 0,01 und 2 M und eine Wasserstoffionenkonzentration zwischen 0,01 und 2 M aufweist.

6. Verfahren zur Herstellung von Wasserstoffperoxid aus Wasserstoff und Sauerstoff in einem Reaktionsmedium bei erhöhtem Druck, dadurch gekennzeichnet, dass:

(i) ein nicht mehr als 2 Gew.-% einer organischen Komponente enthaltendes wässriges Reaktionsmedium verwandt wird; und

(ii) eine katalytisch wirksame Menge Pd auf Aktivkohle als Katalysator verwandt wird, wobei der Katalysator in situ durch Zugabe einer Pd-Salzlösung und fein verteilter Kohle in das $H_2O_2$-Reaktionsgefäss oder ein mit diesem Reaktionsgefäss verbundenes Gefäss hergestellt wird, so dass die resultierende Reaktionsmischung ein Verhältnis von Pd zu Pd plus Kohle von mehr als 0,5% aufweist.

7. Verfahren, wie in Anspruch 6 beansprucht, worin das Gewichtsverhältnis von Pd zu Pd plus Kohle mehr als 2% beträgt.

8. Verfahren, wie in Anspruch 6 oder Anspruch 7 beansprucht, worin die Chloridionenkonzentration zwischen 0,01 und 2 M und die Wasserstoffionenkonzentration zwischen 0,01 und 2 M beträgt.

**Revendications**

1. Un procédé de production de peroxyde d'hydrogène à partir d'hydrogène et d'oxygène dans un milieu réactionnel à des pressions supérieures à la pression atmosphérique, caractérisé en ce que:

(i) on fait réagir l'oxygène et l'hydrogène dans un milieu réactionnel aqueux ne contenant pas plus de 2% en poids d'un composant organique; et

(ii) on utilise comme catalysateur une quantité catalytiquement efficace de Pd sur du carbone adsorbant dans un rapport en poids de Pd à Pd plus carbone supérieur à 0,5 pour cent.

2. Un procédé tel que revendiqué dans la revendication 1 dans lequel on prépare in situ le Pd sur carbone utilisé comme catalyseur.

3. Un procédé tel que revendiqué dans la revendication 2 dans lequel on prépare in situ le catalyseur en introduisant une solution de sel de palladium conjointement à du carbone finement divisé dans le milieu réactionnel aqueux.

4. Un procédé tel que revendiqué dans l'une quelconque des revendications précédentes dans lequel le rapport en poids de Pd à Pd plus carbone est supérieur à 2 pour cent.

5. Un procédé tel que revendiqué dans l'une quelconque des revendications précédents, dans lequel le milieu réactionnel a une concentration en ion chlorure comprise entre 0,01 et 2M et une concentration en ion hydrogène comprise entre 0,01 et 2M.

6. Un procédé de production de peroxyde d'hydrogène à partir d'hydrogène et d'oxygène dans un milieu réactionnel à des pressions supérieures à la pression atmosphérique, caractérisé en ce que

(i) on utilise un milieu réactionnel aqueux ne contenant pas plus de 2% en poids d'un composant organique; et

(ii) on utilise comme catalyseur une quantité catalytiquement efficace, de Pd sur du carbone adsorbant, ledit catalyseur étant préparé in situ par addition d'une solution de sel de Pd et du carbone finement divisé au récipient réactionnel à $H_2O_2$ ou à un récipient communiquant avec ce récipient réactionnel, de manière que le mélange réactionnel résultant ait un rapport de Pd à Pd plus carbone supérieur à 0,5 pour cent.

7. Un procédé tel que revendiqué dans la revendication 6 dans lequel le rapport en poids de Pd à Pd plus carbone est supérieur à 2 pour cent.

8. Un procédé tel que revendiqué dans la revendication 6 ou la revendication 7 dans lequel la concentration en ion chlorure est comprise entre 0,01 et 2M et la concentration en ion hydrogène est comprise entre 0,01 et 2M.